(19) Europäisches Patentamt
European Patent Office
Office européen des brevets

(11) **EP 2 990 169 A1**

(12) **EUROPEAN PATENT APPLICATION**

(43) Date of publication:
**02.03.2016 Bulletin 2016/09**

(51) Int Cl.:
*B27B 17/00* *(2006.01)*      *A01G 23/091* *(2006.01)*
*B23D 59/00* *(2006.01)*      *B27B 1/00* *(2006.01)*
*A01G 23/083* *(2006.01)*

(21) Application number: **15181064.5**

(22) Date of filing: **14.08.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **29.08.2014 NZ 62966614**

(71) Applicant: **Waratah NZ Limited**
**Tokoroa 3420 (NZ)**

(72) Inventors:
• **Kaye, Brett James**
  **3140 Tauranga (NZ)**
• **Smythe, Justyn Peter**
  **3434 Cambridge (NZ)**

(74) Representative: **Magin, Ludwig Bernhard**
**John Deere GmbH & Co. KG**
**Global Intellectual Property Services**
**John-Deere-Strasse 70**
**68163 Mannheim (DE)**

(54) **A TIMBER-WORKING DEVICE AND METHOD OF OPERATION**

(57) A timber-working device (8) includes a frame (200), including a feed axis (212) having first and second sides. A drive system independently feeds stems along the feed axis, including a first rotary drive (316a) having a first wheel (206a) acting against a first stem on the first side, and a second rotary drive (316b) having a second wheel (206b) acting against a second stem on the second side. The device (8) includes at least two distance measurement devices (320a, 320b, 324), each side of the feed axis having an associated distance measurement device. Each generates measurement signals indicative of the length of stems fed along the feed axis, at least one of them indicative of rotation of one of the rotary drives. A processor (302, 304) receives the respective measurement signals, and for each of the first and second stems, determines the length of at least a portion of the stem fed by the drive system based at least in part on the respective measurement signals.

FIG. 2

EP 2 990 169 A1

**Description**

Field of the Disclosure

The present invention relates to a timber-working device and method of operation.

Background

It is well-known to mount timber-working devices, often referred to as forestry or harvester heads, to a carrier vehicle in order to perform a number of operations in connection with timber processing. These operations may include one, or a combination of, grappling and felling a standing tree, delimbing a felled stem, debarking the stem, and cutting the stem into logs (known as bucking) - commonly using at least one chainsaw.

Many such harvester heads have the ability to measure the length of the stem, for example using a frame mounted measuring wheel, the rotation of which as a stem passes is measured using an encoder to infer length. This data may be used to determine the optimal position of saw cuts in order to maximise the value of logs obtained from that stem, and the pile the logs should be sorted into for further processing.

More recently, some forestry heads have been configured for processing multiple stems at a time, in which stems may be fed through the head independently from each other. However, such heads do not measure the lengths of these stems independently. This can require the operator to make decisions with less than optimal information, impacting on productivity and log quality.

Alternatively, operators may be particularly selective of stems they pick up simultaneously for processing - in particular selecting stems of a similar length and diameter - to reduce the decision making required during processing in the knowledge that the stems may be treated effectively the same. However, this sorting and picking process adds time and therefore cuts into productivity.

It is an object of the present invention to address the foregoing problems or at least to provide the public with a useful choice.

All references, including any patents or patent applications cited in this specification are hereby incorporated by reference. No admission is made that any reference constitutes prior art. The discussion of the references states what their authors assert, and the applicants reserve the right to challenge the accuracy and pertinency of the cited documents. It will be clearly understood that, although a number of prior art publications are referred to herein, this reference does not constitute an admission that any of these documents form part of the common general knowledge in the art, in New Zealand or in any other country.

Throughout this specification, the word "comprise" or "include", or variations thereof such as "comprises", "includes", "comprising" or "including" will be understood to imply the inclusion of a stated element, integer or step, or group of elements integers or steps, but not the exclusion of any other element, integer or step, or group of elements, integers or steps.

Further aspects and advantages of the present invention will become apparent from the ensuing description which is given by way of example only.

Summary

According to an exemplary embodiment of the present invention there is provided a timber-working device, including:

a frame, including a feed axis having first and second sides relative to the frame;

a drive system configured to independently feed stems along the feed axis, including a first rotary drive having a first wheel configured to act against a first stem on the first side of the feed axis, and a second rotary drive having a second wheel configured to act against a second stem on the second side of the feed axis,

at least two distance measurement devices, wherein each side of the feed axis has an associated distance measurement device, each configured to generate measurement signals indicative of the length of stems fed along the feed axis,

wherein at least one of the distance measurement devices is associated with one of the rotary drives and its measurement signal is indicative of rotation of the drive; and

at least one processor configured to:

receive the respective measurement signals; and

for each of the first and second stems, determine the length of at least a portion of the stem fed by the drive system based at least in part on the respective measurement signals.

According to an exemplary embodiment of the present invention there is provided a method for determining the respective lengths of at least portions of a first stem and a second stem independently fed along a feed axis of a timber-working device by a first rotary drive and a second rotary drive respectively, the method including the steps of:

receiving measurement signals from distance measurement devices indicative of the length of stems fed along the feed axis, wherein at least one of the measurement signals is indicative of rotation of one of the rotary drives; and

for each of the first and second stems, determining the length of at least a portion of the stem fed by the drive system based at least in part on the respective measurement signals.

According to an exemplary embodiment of the present invention there is provided an article of manufacture having computer storage medium storing computer readable program code executable by a computer to implement a method for determining the respective lengths of at least portions of a first stem and a second stem independently fed along a feed axis of a timber-working device by a first rotary drive and a second rotary drive respectively, the code including:

computer readable program code receiving measurement signals from distance measurement devices indicative of the length of stems fed along the feed axis, wherein at least one of the measurement signals is indicative of rotation of one of the rotary drives; and

computer readable program code determining, for each of the first and second stems, the length of at least a portion of the stem fed by the drive system based at least in part on the respective measurement signals.

The timber-working device may be a forestry or harvester head, and may be referred to as such throughout the specification. Forestry heads typically have the capacity to grapple and fell a standing tree, delimb and/or debark a felled stem, and cut the stem into logs. However, a person skilled in the art should appreciate that the present invention may be used with other timber-working devices, and that reference to the timber-working device being a forestry head is not intended to be limiting.

The rotary drive may be any suitable actuator for producing rotary motion as known to a person skilled in the art. For example, the rotary drives may be fluid driven - such as hydraulic motors. However, it should be appreciated that this is not intended to be limiting.

A distance measuring device may be any suitable means known to those skilled in the art for measuring the length of at least a portion of a stem passing a point on the frame as it is fed along the feed axis by the drive system.

The distance measuring device for determination of rotation of a rotary drive may be any suitable means known to a person skilled in the art. For example, in an exemplary embodiment the distance measuring device may be a rotary encoder. The encoder may operate, for example, using mechanical, optical, magnetic, or capacitive principles to determine rotation of the portion of the drive to which the wheel is mounted.

It should be appreciated that reference to rotation of the rotary drive may include partial rotation of the wheel, and/or number of complete revolutions.

Given known geometry of components of the device - particularly the diameter of the wheels engaging the stems - the length of the stem being fed by the wheels may then be determined. For example, length of at least a portion of a stem which has been fed by a rotary drive may be determined as follows:

$$\text{Length} = \text{Wheel Circumference} * \text{Revolutions}.$$

In exemplary embodiments determination of length may be based, at least in part, on the species of the first and/or second stem.

The wheels of rotary drives commonly have a gripping surface including projections (whether teeth or blades) which penetrate the surface of stems being held and fed by the drive system. The species of the tree being processed with influence, among other things, the depth to which the gripping surface penetrates. This depth of penetration alters the effective diameter of the wheel and therefore circumference. As such, it is envisaged that accuracy of length determination based on rotation of the rotary drive may be assisted by accounting for species.

In exemplary embodiments, an indication of the species of the stem may be input to the processor by an operator of the timber-working device, as known in the art. The selection may be persistent - i.e. determination of stem length may be based on a previously selected species until an indication of a different species is received. It should be appreciated that in exemplary embodiments, automated determination of species may be performed and used in determination of stem length.

According to an exemplary embodiment of the present invention there is provided a method for determining the length of at least portions of a stem fed along a feed axis of a timber-working device by a first rotary drive and a second rotary drive, the method including the steps of:

receiving a measurement signal from a distance measurement device indicative of the length of the stem fed along the feed axis, wherein the measurement signal is indicative of rotation of one of the rotary drives;

determining the species of the stem; and

determining the length of at least a portion of the stem fed by the drive system based at least in part on the measurement signal, and the species of the stem.

In an exemplary embodiment, one of the distance measuring devices may be a measuring wheel, as known in the art. Such a measuring wheel may be brought into contact with a stem, and an encoder used to generate a signal indicative of the wheel's revolutions which may be used to determine the length of stem driven relative to the measuring wheel.

It is envisaged that the measuring wheel may be laterally offset from feed axis, such that the measuring wheel may be used to measure the length of one stem when two stems are being processed by the timber-working device simultaneously, as well as during single stem processing.

In an exemplary embodiment, the measurement signal of the measuring wheel may be given preference over the measurement signal of a distance measurement devices associated with one of the rotary drives. For example, where two stems are to be driven simultaneously, the measurement signal of the measuring wheel may be used to infer length measurement of the stem with which the measuring wheel is not in contact. Inaccuracy in length determination based on rotation of a rotary drive may be introduced in cases where the wheels of the drive mechanism slip. As the measuring wheel is not driven, it is not as susceptible to false readings in this regard.

The measurement signal from the measuring wheel may be used in comparison with that of the rotary drives to assess accuracy of the length determination performed using the signals from the rotary drives. In exemplary embodiments, the measurement signal from the distance measurement device associated with a rotary drive may be compared with that from the measuring wheel to identify loss of traction by the wheel of the rotary drive, Where the rotary drive is identifying as travelling further than the measuring wheel, this is indicative that the rotary drive's wheel is slipping. Control of the rotary drive may be adjusted accordingly.

In addition to determining the overall length of the stems, the drive system may be controlled to independently feed the respective stems to target lengths.

The timber-working device may include a cutting device - for example at least one saw. It is known for forestry heads to include a main chainsaw which is primarily used for the felling and cross cutting of stems. Further, some forestry heads may include a secondary or topping chainsaw. The topping saw is typically of a lower specification than the main saw, and used primarily during processing once a tree is felled. Reference to the cutting device being a chainsaw is not intended to be limiting, as the saw may take other forms - for example a disc saw. Further, the cutting device may take other forms known in the art, for example a shear.

In an exemplary embodiment, the length measurement of the respective stems may be used to drive the stems to predetermined points along the feed axis. The predetermined points along the feed axis may be one or more cutting positions at which one or both of the stems are to be severed by the cutting device. The act of feeding a stem to a target length and severing it with a cutting device may herein be referred to as processing the stem.

Such cutting positions may be determined on the basis of target lengths of logs to be produced from the stem. Such target lengths may be designated by the operator, or as part of an automated value optimisation determination, as known in the art in relation to single stem processing.

The respective diameters of the stems may be determined using any suitable means known in the art. For example, in a configuration well known in the art the rotary drives may be mounted to drive arms pivotally attached to the frame. The drive arms may be driven, for example using hydraulic cylinders, between open and closed positions to grapple and release stems using the feed wheels.

Angular deflection of the drive arms may be used in conjunction with known geometries of the timber-working device to infer the diameter(s) of the stems held by the arms. Similarly, the timber-working device may include delimb arms configured to be closed about the stems, having sharpened edges to cut limbs from the stems as they are fed by the drive system. As with the drive arms, angular position of the delimb arms may be used to determine stem diameter.

The determined diameters of the stems may influence processing of the individual stems. In an exemplary embodiment, a target length for a cutting position of a stem may be adjusted on the basis of the determined diameter for that stem.

For example, the timber-working device may determine that one of the stems has reached a minimum diameter, and adjust the target length to one which may be achieved before the minimum diameter occurs. It should be appreciated that this may include proposing the adjusted target length to the operator for approval prior to actioning the adjustment. Where the minimum diameter has been reached for one stem, the other stem may be independently fed to achieve its previously determined target length before the stems are severed using the cutting device.

In an exemplary embodiment, where the measuring wheel is in contact with the stem with the comparatively shorter target length as the result of diameter limiting (for example the first stem), both stems may be driven simultaneously to the target length of the first stem using the measurement signal from the measuring wheel. The second stem may then be driven to its comparatively longer target length using the measurement signal from the distance measuring device associated with the rotary drive used to feed the second stem. In doing so, the accuracy of the measuring wheel may be utilised for both stems. Further, by not feeding the first stem to the second stem's target length and subsequently reversing the first stem, the risk of the first stem breaking due to the weight on the undersized diameter held by the head may be reduced.

In another embodiment, a comparison of the respective diameters may be performed. Where the difference in diameter of the two stems is greater than a predetermined threshold, the stem having the greater diameter may be processed until it is determined that the differential is below the threshold. The stems may then be processed simultaneously - enabling grouping of the resulting logs to reduce labour associated with subsequently sorting the pile. In exemplary embodiments, the drive system may include a frame mounted rotary drive on either side of the feed axis, which may be controlled independently to each other. Where two stems are grasped by drive arms, these frame mounted wheels may be controlled together with those of the respective drive arms to independently control the relative positions of the two stems along the feed axis.

In an embodiment, the rotary drives of the drive arms include the distance measurement devices. The wheels of the drive arms may be where slipping predominantly occurs due to pressure exerted by the arms, and the signals generated by the distance measurement devices may be used to detect such loss of traction. However, it should be appreciated that this is not intended to be limiting; where a frame mounted drive and arm mounted drive are used in conjunction to feed a stem, either or both of the drives may be configured to output a signal indicative of rotation of the respective drives.

Where rotation of both frame and arm mounted drives is measured, it is envisaged that these may be compared to determine loss of traction or slipping of one or more of the wheels. For example, where the signal from the arm mounted drive indicates that the rate of rotation of the drive has accelerated, while rotation of the frame mounted drive does not increase proportionally, this may indicate that the arm mounted wheel has lost traction. This comparison may be used to select a preferred length measurement - in the example above the length measurement obtained from the frame mounted drive may be preferred until the arm mounted wheel has regained traction.

The various illustrative logical blocks, modules, circuits, and algorithm steps described in connection with the embodiments disclosed herein may be implemented as electronic hardware, computer software, or combinations of both. In particular, they may be implemented or performed with a general purpose processor such as a microprocessor, or any other suitable means known in the art designed to perform the functions described.

The steps of a method or algorithm and functions described in connection with the embodiments disclosed herein may be embodied directly in hardware, in a software module executed by a processor, or in a combination of the two. If implemented in software, the functions may be stored as processor readable instructions or code on a tangible, non-transitory processor-readable medium - for example Random Access Memory (RAM), flash memory, Read Only Memory (ROM), hard disks, a removable disk such as a CD ROM, or any other suitable storage medium known to a person skilled in the art. A storage medium may be connected to the processor such that the processor can read information from, and write information to, the storage medium.

Brief Description of Drawings

Further aspects of the present invention will become apparent from the following description which is given by way of example only and with reference to the accompanying drawings in which:

FIG. 1        is a side view of an exemplary timber-working system having an exemplary forestry head;
FIG. 2        is an elevated view of the exemplary forestry head;
FIG. 3        is a diagrammatic view of an exemplary control system for the timber-working system;

FIG. 4          is a flowchart illustrating an exemplary method for operating the forestry head;

FIG. 5A-C     are elevated views of the forestry head in operation according to the method of FIG. 4;

FIG. 6          is a flowchart illustrating another exemplary method for operating the forestry head;

FIG. 7A-C     are elevated views of the forestry head in operation according to the method of FIG. 6;

FIG. 8          is a sectional view of an exemplary feed wheel for use with an exemplary forestry head, and

FIG. 9          is a flowchart illustrating an exemplary method of determining the length of stems processed using an exemplary forestry head;

Detailed Description

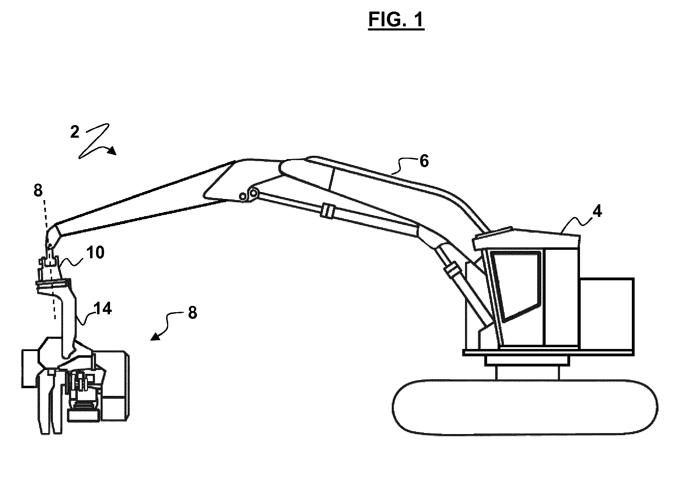

FIG. 1 illustrates a timber-working system including a carrier 2 for use in forest harvesting. The carrier 2 includes an operator cab 4 from which an operator (not shown) controls the carrier 2. The carrier 2 further includes a boom assembly 6, to which a timber-working device in the form of a forestry head 8 is connected.

Connection of the head 8 to the arm 6 includes a rotator 10, configured to rotate the head 8 about the generally vertical axis of rotation marked by dashed line 12. A tilt bracket 14 further allows rotation of the head 4 between a prone position (as illustrated) and a standing position.

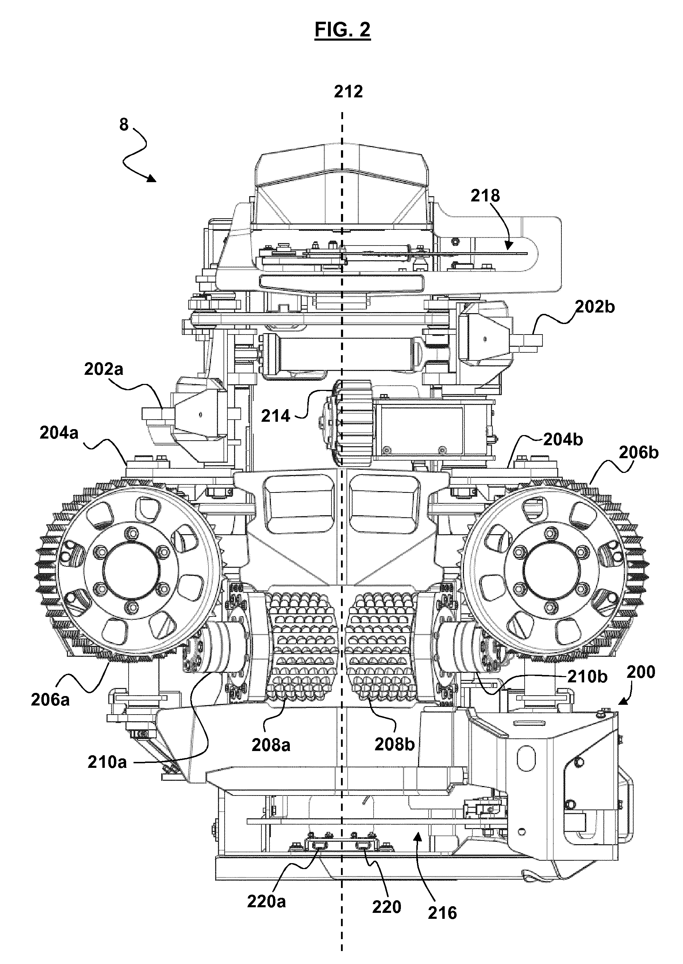

Referring to FIG. 2, the head 8 includes a frame 200 to which the tilt bracket 14 of FIG. 1 is pivotally attached. Right hand (RH) and left hand (LH) delimb arms 202a and 202b are pivotally attached to the frame 200, as are opposing RH and LH feed arms 204a and 204b. RH and LH feed wheels 206a and 206b are attached to RH and LH feed arms 204a and 204b respectively via associated rotary drives (not illustrated in FIG. 2). RH and LH frame-mounted feed wheels 208a and 208b are driven by RH and LH frame mounted drives 210a and 210b, and together with feed wheels 206a and 206b may be controlled to feed one or more stems (not illustrated) along feed axis 212 of the head 8. Feed wheels 206a, 206b, 208a and 208b and their associated rotary drives may collectively be referred to as the 'feed system.'

A measuring wheel 214 may be lowered to come in contact with a passing stem in order to measure length. The measuring wheel 214 is offset laterally from the feed axis 212, such that it only contacts a stem held on the LH side of the feed axis when two stems are held by the head 8, but while single stemming - i.e. only a single stem held by feed arms 204a and 204b - the measuring wheel 214 can still contact that single stem.

A main chainsaw 216, and a topping chainsaw 218, are attached to the frame 200. The main saw 216 is typically used to fell a tree when the head 8 is in a harvesting position, and to buck stems into logs in the processing position of the head 8 (as seen in FIG. 1). The topping saw 218 may be used to cut off a small-diameter top portion of the stem(s) to maximize the value recovery of the trees.

RH and LH optical sensors 220a and 220b are attached to the frame 200 on either side of the feed axis 212. These sensors 220a and 220b may be used to detect the respective ends of stems held by the head 8.

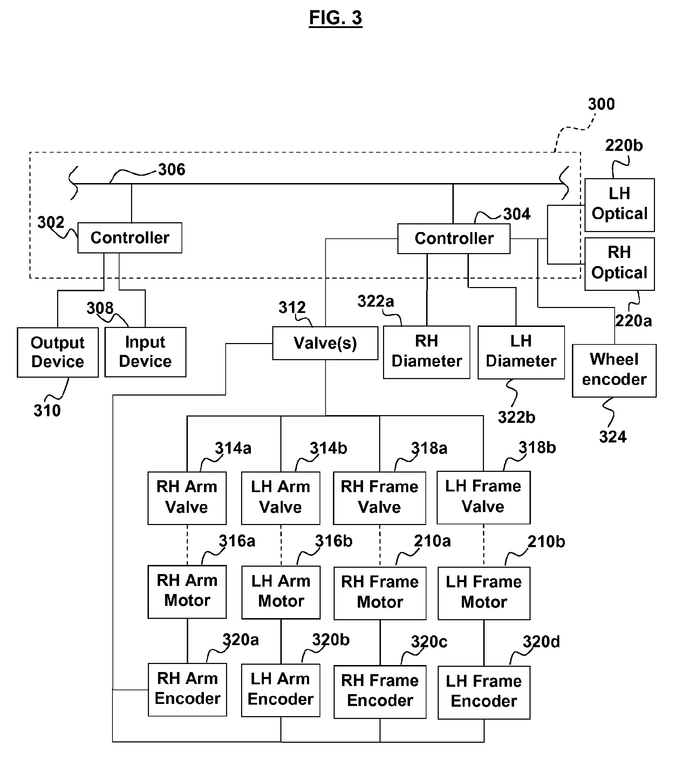

The various operations of the head 8 may be controlled by the operator using hand and foot controls as known in the art. Further, certain automated functions of the harvester head 4 may be controlled by an electronic control system 300 as shown by FIG. 3. Description of the electronic control system 300 may include reference to features of FIG. 1 and/or FIG. 2.

The control system 300 includes one or more electronic controllers, each controller including a processor and memory having stored therein instructions which, when executed by the processor, causes the processor to perform the various operations of the controller.

For example, the control system 300 includes a first controller 302 on board the carrier 2 and a second controller 304 on board the head 8. The controllers 302, 304 are connected to one another via a communications bus 306 (e.g., a CAN bus).

A human operator operates an operator input device 308, for example hand and foot controls, located at the operator's cab 4 of the carrier 2 to control the head 8. Details of operation are output to an output device 310 - for example a monitor. Certain automated functions may be controlled by first controller 302 and/or second controller 304.

The RH and LH optical sensors 220a and 220b are electronically coupled to the second controller 304, and configured to output respective signals indicative of the end of a stem being present within the respective sensing regions associated with the sensors 220a and 220b.

The head 8 has a number of valves 312 arranged, for example, in a valve block and coupled electrically to the second controller 304 so as to be under its control. The valves 312 include, for example, drive valves 314a and 314b configured to control operation of the hydraulic motors 316a and 316b associated with the RH and LH feed wheels 206a and 206b, and drive valves 318a and 318b and configured to control operation of the RH and LH frame mounted drives 210a and 210b associated with RH and LH frame-mounted feed wheels 208a and 208b.

The valves 312 further include drive valves for controlling operation of the saws 216 and 218.

Rotary encoders 320a, 320b, 320c and 320d may be associated with rotary drives 316a, 316b, 210a, and 210b respectively, and electronically coupled to the second controller 304. It should be appreciated that, in embodiments, encoders may not be provided for each rotary drive - i.e. only one drive on each side may be provided with an encoder.

Each rotary encoder 320a, 320b, 320c and 320d is configured to output a signal indicative of rotation of the drives 316a, 316b, 210a, and 210b and thus feed wheels 206a, 206b, 208a and 208b. For known wheel diameters, the length of a stem driven by the wheels may be determined by multiplying the rotation value by the wheel circumference. It should be appreciated that the value of the rotations in a reverse direction may be subtracted from rotations in a forward direction to determine the length ultimately traversed.

Angular position sensors - for example RH rotation sensor 322a mounted to delimb arm 202a and/or feed arm 204a, and LH rotation sensor 322b mounted to delimb arm 202b and/or feed arm 204b - are electronically coupled to the second controller 304. Each is configured to output a signal indicative of the angular position of the associated arm. As an example, the rotation sensors 322a and 322b are rotary encoders.

A measuring wheel encoder 324 is electrically coupled to the second controller 304, and configured to output a measuring signal indicating the length of the stem(s) that has passed the measuring wheel 214 when lowered. When processing a single stem, the output of the rotary encoders 320a, 320b, 320c and 320d is compared with the measurement performed by encoder 324 in order to identify deviation which may require re-calibration to improve accuracy.

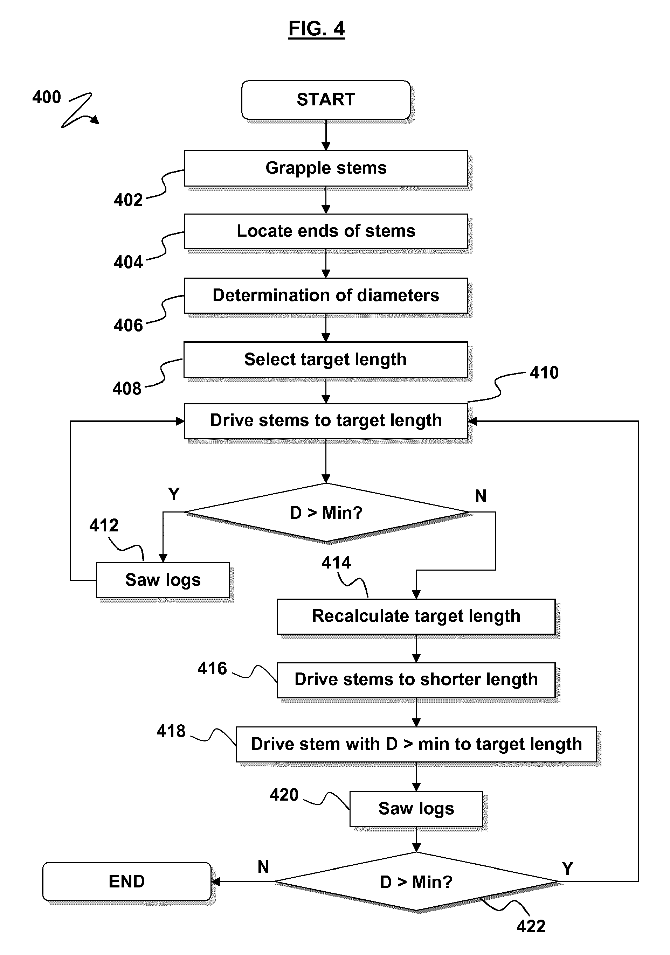

The control system 300 may be configured to implement method 600 of FIG. 4, which will be described with reference to FIGs. 1 through 3 and FIGs 5A, 5B, and 5C.

In step 402, a human operator operates the operator input device 308 to grasp a first stem and a second stem (stems not illustrated) with the delimb arms 202a and 202b, and feed arms 204a and 204b such that the stems are positioned between the arm-mounted feed wheels 206a and 206b, and frame-mounted feed wheels 208a and 208b. The first stem is positioned to the RH side of the feed axis 212, while the second stem is positioned to the LH side of the feed axis 212.

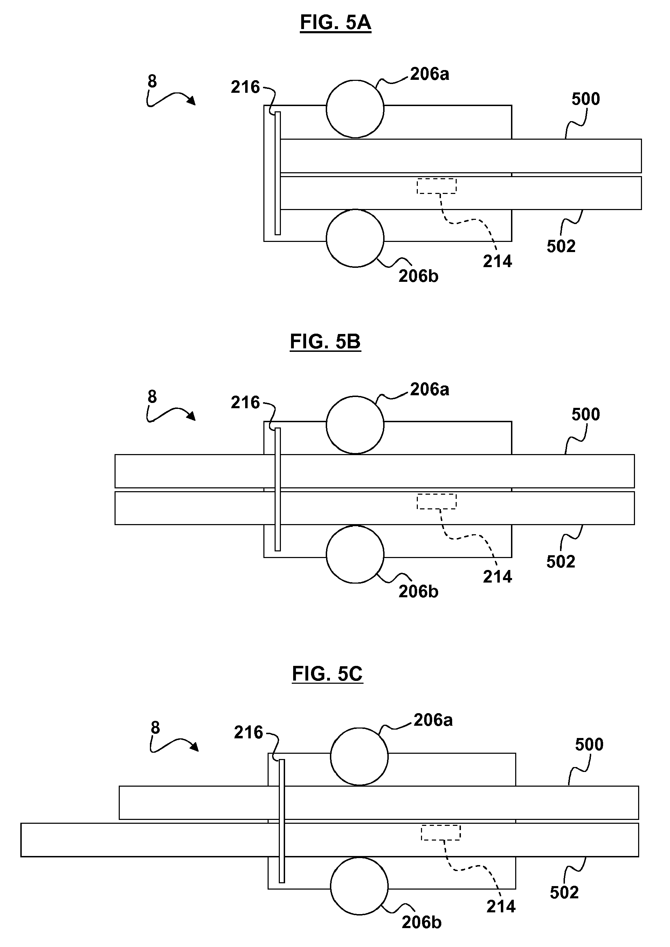

In step 404, the first controller 302 receives from operator input device 308 a signal indicative of a request to find the ends of the stems, or perform a cut using either saw 216 or 218 as appropriate to establish an end position. In response to that signal, the first controller 302 broadcasts an appropriate request on bus 306, which is received by the second controller 304. The second controller 304 actions the request, controlling the various functions of the head 8 as required. Referring to FIG. 5A, the first stem 500 and second stem 502 are aligned at this point, and ready to be processed.

In step 406, the rotation sensors 322a and 322b transmit signals indicating the angular positions of the respective associated arms to the first controller 302 via second controller 304. The first controller 302 determines the relative diameters of the first and second stems 500 and 502. This information may be presented to the operator via monitor 310.

In step 408 the first controller 302 receives from operator input device 308 a signal indicative of a selection for a target length for each of the first and second stems. In an alternative embodiment, the target lengths may be automatically set based on previously entered preferences - or at least proposed to the operator for approval.

In step 410, the first controller 302 broadcasts a request to drive both stems along the feed axis 212 to the target length. The second controller 304 receives the request, and outputs a control signal to drive valves 314a, 314b, 318a and 318b to operate the drives 316a, 316b, 210a, and 210b and thus drive feed wheels 206a, 206b, 208a and 208b.

As the stems are driven, the second controller 304 monitors the output of the rotation sensors 322a and 322b to determine if one or both of stems reaches a minimum diameter before the target length is achieved.

If not, the feed length is measured using the output of wheel encoder 324. When the target length is achieved saw 216 may then be operated to sever the stems in step 412. The process then returns to step 410 for feeding of the stems to the next target length.

If a minimum diameter is reached, the first controller 302 determines a new target length for the stem below diameter in step 414. For example, if the previous target length for the first stem was 16 feet at a 4 inch minimum diameter, the target length may be downgraded to the largest length prior to the diameter going below 4 inches - for example 14 feet.

In step 416, the second controller 304 controls the head 8 such that the first and second stems 500 and 502 are driven to the shorter target length (for example 14 feet), using the output of the wheel encoder 324 to measure length - as illustrated by FIG. 5B.

In step 418, the second stem 502 is driven a further 2 feet to its target length, again using the output of the wheel encoder 324 to measure distance. It should be appreciated that were the first stem 500 to be driven to the longer length, the output of RH arm encoder 320a could be used to measure length during step 418.

Both stems 500 and 502 may then be severed using saw 216 in step 420. If the diameter of the second stem 502 is determined to remain above the minimum diameter in step 422, the process returns to step 410 to continue processing of that stem 502. Otherwise, the remaining portions of the stems 500 and 502 may be ejected and the process reset.

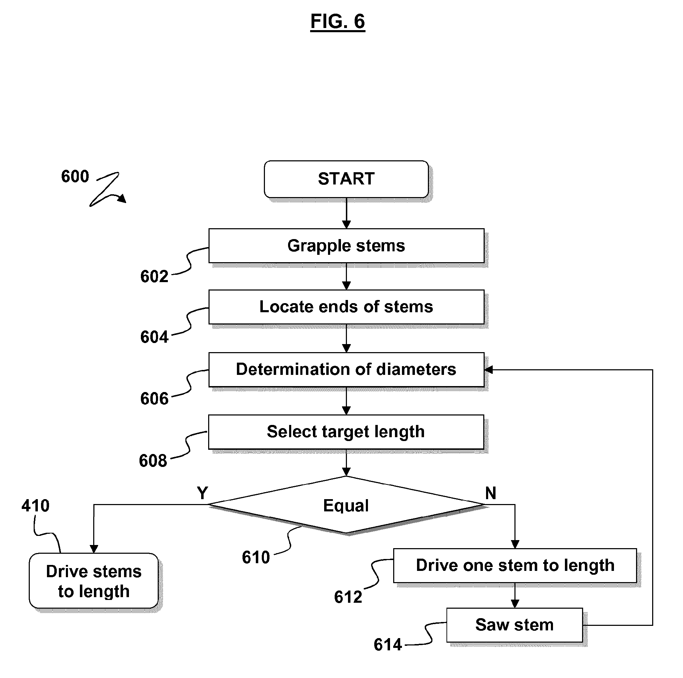

The control system 300 may be configured to implement method 600 of FIG. 6, which will be described with reference to FIGs. 1 through 3 and FIGs 7A, 7B, and 7C.

In step 602, a human operator operates the operator input device 308 to grasp a first stem and a second stem (stems not illustrated) with the delimb arms 202a and 202b, and feed arms 204a and 204b such that the stems are positioned between the arm-mounted feed wheels 206a and 206b, and frame-mounted feed wheels 208a and 208b.

The first stem is positioned to the RH side of the feed axis 212, while the second stem is positioned to the LH side of the feed axis 212.

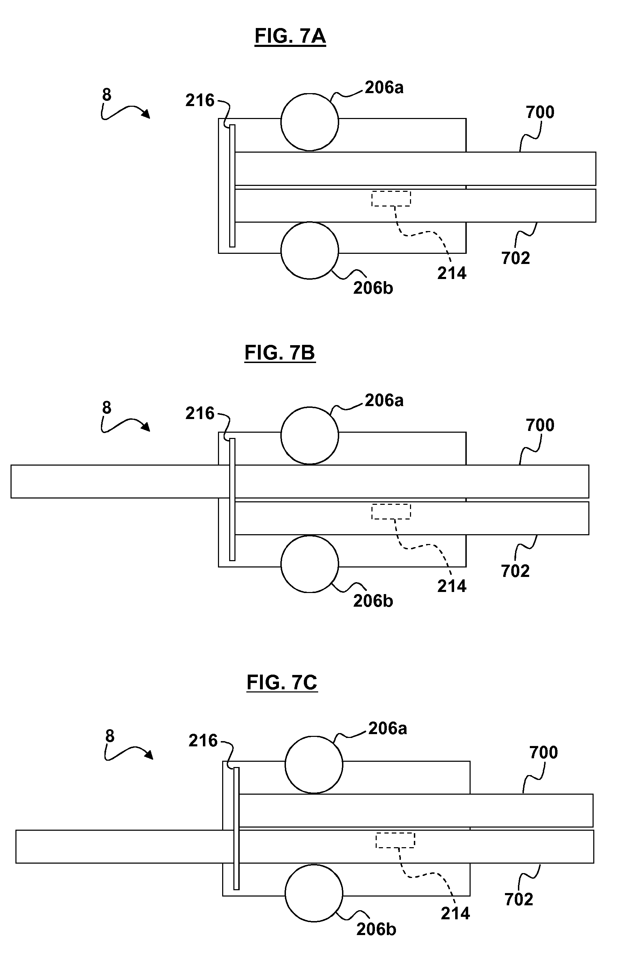

In step 604, the first controller 302 receives from operator input device 308 a signal indicative of a request to find the ends of the stems, or perform a cut using either saw 216 or 218 as appropriate to establish an end position. In response to that signal, the first controller 302 broadcasts an appropriate request on bus 306, which is received by the second controller 304. The second controller 304 actions the request, controlling the various functions of the head 8 as required. Referring to FIG. 7A, the first stem 700 and second stem 702 are aligned at this point, and ready to be processed.

In step 606, the rotation sensors 322a and 322b transmit signals indicating the angular positions of the respective associated arms to the first controller 302 via second controller 304. The first controller 302 determines the relative diameters of the first and second stems 700 and 702. This information may be presented to the operator via monitor 310.

In step 608 the first controller 302 receives from operator input device 608 a signal indicative of a selection for a target length for each of the first and second stems. In an alternative embodiment, the target lengths may be automatically set based on previously entered preferences - or at least proposed to the operator for approval.

If the target lengths of both stems are determined to be the same in step 610, the process may enter step 410 of method 400. If not, in step 612 the first controller 302 broadcasts a request to drive one of the stems along the feed axis 212 to the target length.

For example, in the case of first stem 700 the second controller 304 receives the request, and outputs a control signal to drive valves 314a and 318a to operate the drives 316a and 210a, and thus drive feed wheels 206a and 208a.

As the stem 700 is driven, the second controller 304 monitors the feed length using encoders 320a or 320c. When the target length is achieved - as illustrated in FIG. 7B - saw 216 may then be operated to sever the stems in step 614. The process then returns to step 606 for reassessment of target length.

For example, in the case of second stem 702 the second controller 304 outputs a control signal to drive valves 314b and 318b to operate the drives 316b and 210b, and thus drive feed wheels 206b and 208b.

As the stem 702 is driven, the second controller 304 monitors the feed length using the output of wheel encoder 214 (although in exemplary embodiments encoders 320b or 320d may be used). When the target length is achieved - as illustrated in FIG. 7C - saw 216 may then be operated to sever the stems in step 614. The process then returns to step 606 for reassessment of target length.

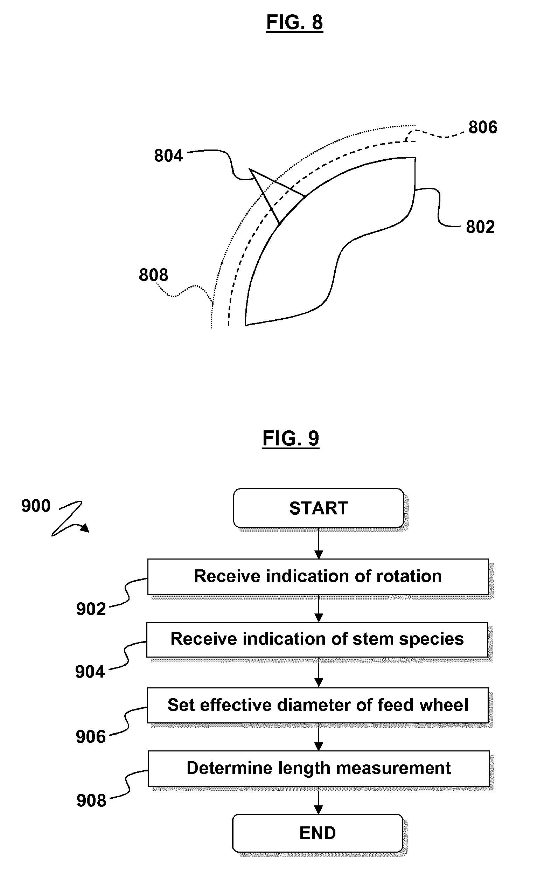

FIG. 8 shows a section of a feed wheel 802 intended to be used, for example, as a feed wheel on a drive arm such as drive arm 204a of FIG. 2. The feed wheel 804 includes a number of teeth 804 projecting outwardly.

In use, the depth to which the teeth 804 penetrate the surface of a stem is heavily influenced by the tree species of the stem. The effective diameter of the wheel 804 changes depending on the depth of penetration. By way of explanation, dashed line 806 illustrates the effective diameter in the case of a first species, while dotted line 808 illustrates the effective diameter for a second species with a greater density (i.e. less penetration).

FIG. 9 illustrates a method 900 of determining length measurements of stems processed using measurement signals output from a rotary encoder associated with a rotary drive driving a feed wheel - for example RH arm encoder 320a of FIG. 3. Reference may also be made to FIG. 3 when describing method 900.

In step 902, second controller 304 receives the output from encoder 320a indicating the rotation of drive 316a and thus wheel 206a.

In step 904, second controller 304 receives a selection of the species of the stem being processed from first controller 302. It should be appreciated that selection of the species may have been previously selected by the operator.

In step 906, the second controller 304 sets the effective diameter of the wheel 206a based on the selected species.

In step 908, the second controller 304 determines the processed length of the stem using the equation:

$$\text{Length} = (\text{Effective Wheel Diameter} * pi) * \text{Revolutions}.$$

Aspects of the present invention have been described by way of example only and it should be appreciated that modifications and additions may be made thereto without departing from the scope thereof as defined in the appended claims.

**Claims**

1. A timber-working device (8), including:

a frame (200), including a feed axis (212) having first and second sides relative to the frame;
a drive system configured to independently feed stems along the feed axis, including a first rotary drive (316a) having a first wheel (206a) configured to act against a first stem on the first side of the feed axis, and a second rotary drive (316b) having a second wheel (206b) configured to act against a second stem on the second side of the feed axis;
at least two distance measurement devices (320a, 320b, 324), wherein each side of the feed axis has an associated distance measurement device, each configured to generate measurement signals indicative of the length of stems fed along the feed axis;
wherein at least one of the distance measurement devices is associated with one of the rotary drives and its measurement signal is indicative of rotation of the drive; and
at least one processor (302, 304) configured to:

receive the respective measurement signals; and
for each of the first and second stems, determine the length of at least a portion of the stem fed by the drive system based at least in part on the respective measurement signals.

2. A timber-working device (8) as claimed in claim 1, including a cutting device (216, 218), and
wherein the processor (302, 304) is configured to control the drive system to feed the first stem and the second stem to respective target lengths to be cut by the cutting device.

3. A timber-working device (8) as claimed in claim 2, including at least one diameter measuring device (322a, 322b) configured to output a signal indicative of respective diameters of the first stem and the second stem.

4. A timber-working device (8) as claimed in claim 3, wherein the processor (302, 304) is configured to adjust the target length of at least one of the stems on determining that the associated diameter is below a minimum diameter threshold.

5. A timber-working device (8) as claimed in either claim 3 or claim 4, wherein the processor (302, 304) is configured to prioritise feeding of the stem with the greatest diameter.

6. A timber-working device (8) as claimed in any one of claims 3 to 5, wherein the processor (302, 304) is configured to sequentially feed the first and second stems to their respective target lengths on determining that logs resulting from cutting the first and second stems at their target lengths will have differential length and/or diameter characteristics beyond a predetermined threshold.

7. A timber-working device (8) as claimed in claim 4, wherein the processor (302, 304) is configured to:

control the drive system to feed the stems simultaneously to the shorter of the target lengths; and
control the drive system to subsequently drive one of the stems to the longer of the target lengths.

8. A timber-working device (8) as claimed in any one of claims 1 to 7, wherein the first rotary drive (316a) is mounted to a first arm (204a) pivotally connected to the frame (200), and the second rotary drive (316b) is mounted to a second arm (204b) pivotally connected to the frame, and
wherein a third rotary drive (210a) having a third wheel (208a) configured to act against the first stem is mounted to the frame, and a fourth rotary drive (210b) having a fourth wheel (208b) configured to act against the second stem is mounted to the frame.

9. A timber-working device (8) as claimed in claim 8, wherein the third and fourth rotary drives (210a, 210b) are configured to output signals indicative of rotation of the respective drives, and
wherein the processor (302,304) is configured to:

for each of the first and second stems, determine the length of at least a portion of the stem fed by the drive system based at least in part on rotation of the respective third and fourth rotary drives; and
compare the rate of rotation of the paired first and third rotary drives (316a, 210a), and the paired second and fourth rotary drives (316b, 210b) respectively against an expected rate of rotation; and
where the rate of rotation of one rotary drive deviates from the expected rate of rotation beyond a predetermined threshold, selecting the distance determined from the other rotary drive in the pair for use in further processing.

10. A timber-working device (8) as claimed in any one of claims 1 to 9, wherein the processor (302, 304) is configured to:

determine the species of the stem; and

determine the length of at least a portion of each stems based at least in part on the species of the stems.

11. A method for determining the respective lengths of at least portions of a first stem and a second stem independently fed along a feed axis (212) of a timber-working device (8) by a first rotary drive (316a) and a second rotary drive (316b) respectively, the method including the steps of:

receiving measurement signals from distance measurement devices (320a, 320b, 324) indicative of the length of stems fed along the feed axis, wherein at least one of the measurement signals is indicative of rotation of one of the rotary drives; and

for each of the first and second stems, determining the length of at least a portion of the stem fed by the drive system based at least in part on the respective measurement signals.

12. A method for determining the respective lengths of at least portions of a first stem and a second stem as claimed in claim 11, including:

controlling the drive system to feed the first stem and the second stem to respective target lengths to be cut by a cutting device (216, 218).

13. A method for determining the respective lengths of at least portions of a first stem and a second stem as claimed in claim 12, including:

receiving at least one signal indicative of respective diameters of the first stem and
the second stem from at least one diameter measuring device (322a, 322b); and
adjusting the target length of at least one of the stems on determining that the associated diameter is below a minimum diameter threshold.

14. A method for determining the respective lengths of at least portions of a first stem and a second stem as claimed in claims 11 to 13, including:

receiving signals indicative of rotation of a third rotary drive (210a) mounted to a frame (200) of the a timber-working device (8) and having a third wheel (208a) configured to act against the first stem, and a fourth rotary drive (210b) mounted to the frame and having a fourth wheel (208b) configured to act against the second stem, wherein the first rotary drive (316a) is mounted to a first arm (204a) pivotally connected to the frame, and the second rotary drive (316b) is mounted to a second arm (204b) pivotally connected to the frame;
for each of the first and second stems, determining the length of at least a portion of the stem fed by the drive system based at least in part on rotation of the respective third and fourth rotary drives; and
comparing the rate of rotation of the paired first and third rotary drives (316a, 210a), and the paired second and fourth rotary drives (316b, 210b) respectively against an expected rate of rotation, and
where the rate of rotation of one rotary drive deviates from the expected rate of rotation beyond a predetermined threshold, selecting the distance determined from the other rotary drive in the pair for use in further processing.

15. A method for determining the respective lengths of at least portions of a first stem and a second stem as claimed in any one of claims 11 to 14, including:

determining the species of the stems; and
wherein determining the length of at least a portion of each stem is based at least in part on the species of the stems.

FIG. 1

## FIG. 2

## FIG. 3

## FIG. 4

400

START

402 — Grapple stems

404 — Locate ends of stems

406 — Determination of diameters

408 — Select target length

410 — Drive stems to target length

Y          D > Min?          N

412

Saw logs          414 — Recalculate target length

416 — Drive stems to shorter length

418 — Drive stem with D > min to target length

420 — Saw logs

END          N          D > Min?          Y

422

## FIG. 5A

## FIG. 5B

## FIG. 5C

## FIG. 6

```
600

                              ┌──────────────────┐
                              │      START       │
                              └────────┬─────────┘
                                       │
                              ┌────────▼─────────┐
                              │  Grapple stems   │
   602 ─────────────────────  └────────┬─────────┘
                                       │
                              ┌────────▼─────────┐
                              │ Locate ends of stems │
   604 ─────────────────────  └────────┬─────────┘
                                       │
                              ┌────────▼──────────────┐◄──────────────┐
                              │ Determination of diameters │          │
   606 ─────────────────────  └────────┬──────────────┘               │
                                       │                              │
                              ┌────────▼─────────┐                    │
                              │ Select target length │                │
   608 ─────────────────────  └────────┬─────────┘                    │
                                       │                              │
                            Y ╱◄───────▼────────╲ N                   │
   410                      ╱      Equal          ╲                   │
                            ╲                     ╱                    │
                             ╲──────┬────────────╱                    │
                                  610 │                               │
   ┌──────────────┐                   │       ┌──────────────────────┐│
   │ Drive stems  │                   └──────►│ Drive one stem to length │
   │ to length    │                           └──────────┬───────────┘
   └──────────────┘                    612               │
                                                 ┌────────▼─────────┐
                                                 │    Saw stem      │──┘
                                          614 ── └──────────────────┘
```

## FIG. 7A

## FIG. 7B

## FIG. 7C

## FIG. 8

## FIG. 9

Europäisches
Patentamt

European
Patent Office

Office européen
des brevets

# EUROPEAN SEARCH REPORT

Application Number

EP 15 18 1064

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CA 2 431 601 A1 (DUVAL ALAIN [CA]) 17 November 2003 (2003-11-17) * page 7, lines 3-8 * * page 11, line 23 - page 12, line 2 * * page 12, lines 21-25 * * figures 1,3,4,10 * | 1,11 | INV. B27B17/00 A01G23/091 B23D59/00 B27B1/00 A01G23/083 |
| A,P | WO 2015/084184 A2 (WARATAH NZ LTD [NZ]) 11 June 2015 (2015-06-11) * page 4, line 32 - page 5, line 10 * * page 7, lines 7-9 * * page 8, lines 3-8,23-30 * * figures 1-4 * | 1,11 | |
| A,P | WO 2015/084183 A2 (WARATAH NZ LTD [NZ]) 11 June 2015 (2015-06-11) * page 4, lines 32-35 * * page 5, lines 12-20 * * page 9, lines 21-23 * * figures 1-4 * | 1,11 | |
| A | WO 2008/145822 A1 (PONSSE OYJ [FI]; TROTTIER JEAN [CA]; KAURALA ARTO [FI]) 4 December 2008 (2008-12-04) * paragraphs [0045], [0046] * * figures 1-5,9 * | 1,11 | TECHNICAL FIELDS SEARCHED (IPC) B27B A01G B23D |
| A | US 2014/238545 A1 (KAYE BRETT JAMES [NZ]) 28 August 2014 (2014-08-28) * paragraph [0017] * * figures 1A,1B,2A * | 1,11 | |

The present search report has been drawn up for all claims

| Place of search | Date of completion of the search | Examiner |
|---|---|---|
| The Hague | 11 January 2016 | Chariot, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 18 1064

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2016

| Patent document cited in search report | | Publication date | Patent family member(s) | | Publication date |
|---|---|---|---|---|---|
| CA 2431601 | A1 | 17-11-2003 | CA | 2431601 A1 | 17-11-2003 |
| | | | US | 2004238068 A1 | 02-12-2004 |
| | | | WO | 2004105465 A1 | 09-12-2004 |
| WO 2015084184 | A2 | 11-06-2015 | CA | 2904174 A1 | 11-06-2015 |
| | | | NZ | 618511 A | 26-06-2015 |
| | | | WO | 2015084184 A2 | 11-06-2015 |
| WO 2015084183 | A2 | 11-06-2015 | CA | 2904241 A1 | 11-06-2015 |
| | | | NZ | 618435 A | 26-06-2015 |
| | | | WO | 2015084183 A2 | 11-06-2015 |
| WO 2008145822 | A1 | 04-12-2008 | CA | 2692522 A1 | 04-12-2008 |
| | | | EP | 2150099 A1 | 10-02-2010 |
| | | | FI | 20075390 A | 01-12-2008 |
| | | | RU | 2009145629 A | 10-07-2011 |
| | | | WO | 2008145822 A1 | 04-12-2008 |
| US 2014238545 | A1 | 28-08-2014 | AU | 2013203686 A1 | 11-09-2014 |
| | | | CA | 2844180 A1 | 28-08-2014 |
| | | | US | 2014238545 A1 | 28-08-2014 |

EPO FORM P0459

For more details about this annex : see Official Journal of the European Patent Office, No. 12/82